# EUROPÄISCHE PATENTSCHRIFT

(11) **EP 1 679 775 B1**
(45) Veröffentlichungstag und Bekanntmachung des Hinweises auf die Patenterteilung: **15.08.2012**
(21) Anmeldenummer: 05027992.6
(22) Anmeldetag: 21.12.2005
(51) Int. Cl.: H02B 1/20

(54) **Stromsammelschiene**
Busbar
Barre Omnibus

(30) Priorität: 06.01.2005 DE 202005000144 U
(43) Veröffentlichungstag der Anmeldung: 12.07.2006
(73) Patentinhaber: Elkutec GmbH, 32257 Bünde (DE)
(72) Erfinder: Lümkemann, Günter, 32257 Bünde (DE)
(74) Vertreter: Brandt, Detlef

(56) Entgegenhaltungen:
- EP-A- 1 137 035
- DE-A1- 10 105 597
- DE-A1- 19 721 501
- FR-A- 2 664 755

## Beschreibung

Die Erfindung betrifft eine Stromsammelschiene zur gleichzeitigen phasenweisen Speisung mehrerer nebeneinander angeordneter modularer Schaltgeräte in einer elektrischen Installationsverteilung gemäss dem gattungsbildenden Teil des Anspruches 1.

Stromsammelschienen der genannten Art (FR2664755) werden weltweit in unterschiedlicher Ausgestaltung eingesetzt und haben sich prinzipiell für die kostengünstige elektrische Verbindung modularer Schaltgeräte bewährt. Die Schaltgeräte unterliegen dabei auf Grund technischer Weiterentwicklungen sowie geänderter gesetzlicher Vorgaben häufigen baulichen Änderungen. Hinzu kommt die allgemeine Anforderung der Baugrößenreduzierung derartiger Geräte, die dazu führt, dass auch die zur Aufnahme der Anschlusslaschen der einzelnen Stromsammelschienen vorgesehenen Ausnehmungen der Anschlussklemmen an den einzelnen Schaltgeräten der elektrischen Installationsverteilung immer näher zusammenrücken.

Zwar ist es zum gegenwärtigen Zeitpunkt noch möglich, mittels der aus dem Stand der Technik bekannten Stromsammelschienen durch Übereinanderanordnung von Letzteren die Verbindung der Anschlüsse der einzelnen Schaltgeräte vorzunehmen, jedoch ergibt sich durch das zwangsläufige Zusammenrücken der parallel übereinander angeordneten Stromsammelschienen die Problematik, dass der notwendige Drahtanschluss der Stromsammelschienen, der in einer der Anschlussklemmen für die Anschlusslaschen der Stromsammelschienen in einer der verbundenen Schaltgeräte zusätzlich eingeklemmt werden muss, platzmäßig nur noch unter größten Schwierigkeiten zu realisieren ist.

Bei zwei parallel übereinander angeordneten Stromsammelschienen ist es nämlich erforderlich, dass mindestens ein Anschluss einer Stromsammelschiene zwischen den beiden zueinander weisenden Flachseiten der benachbarten Stromsammelschienen hindurchgeführt und in einer Ausnehmung einer Anschlussklemme eines Schaltgerätes zusammen mit einer Anschlusslasche in üblicher Weise durch einen geeigneten Klemmmechanismus fixiert wird. Da der Abstand der zueinander weisenden Flachseiten auf Grund der geänderten Bauabmaße moderner Schaltgeräte unter Umständen nur noch im Bereich von 1 bis 2 mm liegt, ergeben sich zwangsläufig für die Verdrahtung in Folge der notwendigen Drahtdurchmesser große Anschlussschwierigkeiten.

Aufgabe der vorliegenden Erfindung ist es daher, eine Stromsammelschiene der gattungsgemäßen Art so weiter zu entwickeln, dass auch bei unmittelbar nebeneinander liegenden Anschlüssen moderner Schaltgeräte für die dadurch notwendigen unmittelbar nebeneinander befindlichen Stromsammelschienen eine problemlose Anschlussverdrahtung in einer der für die Anschlusslaschen der Stromsammelschiene vorgesehenen Ausnehmungen der Anschlussklemmen möglich ist. Darüber hinaus soll die erfindungsgemäße Stromsammelschiene einfach herstellbar und leicht montierbar sein.

Diese Aufgabe wird erfindungsgemäß in Zusammenschau mit den gattungsbildenden Merkmalen durch die im kennzeichnenden Teil des Anspruches 1 offenbarte technische Lehre gelöst.

Wesentlich für die Erfindung ist es dabei, dass die durch den Längsträger gebildete Verbindungsebene der Stromsammelschiene und die durch die Anschlusslaschen gemeinsam gebildete Anschlussebene der Stromsammelschiene voneinander getrennt parallel beabstandet zueinander angeordnet sind, wobei die Anschlusslaschen durch Verbindungsstege mit dem Längsträger verbunden sind.

Durch diese erfindungsgemäße Gestaltung wird der flachbandförmige Längsträger der Stromsammelschiene, welcher die Verbindung zwischen den einzelnen Anschlusslaschen herstellt und die Verbindungsebene definiert, seitlich aus dem Bereich der unmittelbar in den Anschlussklemmen der Schaltgeräte festgelegten Anschlusslaschen entfernt. Hierdurch kann im Gegensatz zu üblichen aus dem Stand der Technik bekannten Stromsammelschienen nunmehr durch die Tatsache, dass der Bereich über den Anschlusslaschen freigehalten ist, eine Anschlussverdrahtung ohne Platzprobleme direkt in eine der Anschlussklemmen eines Schaltgerätes erfolgen.

Besondere Ausgestaltung des Gegenstandes der Erfindung ergeben sich zusammen mit der technischen Lehre des Anspruches 1 zusätzlich aus den Merkmalen der rückbezogenen Unteransprüche.

Es hat sich insbesondere als vorteilhaft erwiesen, zur Platzeinsparung im Bereich der Anschlüsse der Schaltgeräte die Verbindungsstege im Wesentlichen rechtwinklig zur Anschlussebene und zur Verbindungsebene der Stromsammelschiene anzuordnen. Im Querschnitt weist die Stromsammelschiene somit einen ersten durch den flachbandförmigen Längsträger gebildeten Verbindungsbereich (Verbindungsebene) auf, aus dem rechtwinklig einzelne Verbindungsstege hervorstehen, wobei die Verbindungsstege wiederum rechtwinklig zu den Anschlusslaschen umgebogen sind, die in ihrer Gesamtheit die so genannte Anschlussebene bilden.

Zusätzlich vorteilhaft und auf Grund von Sicherheitsaspekten geboten ist darüber hinaus die Ausgestaltung, die Verbindungsstege mindestens an ihrer den Anschlusslaschen abgewandten Oberseite durch eine Isolierhaube abzudecken. Auf diese Weise wird eine Berührung Strom führender Teile der Stromsammelschiene im eingebauten Zustand zuverlässig ausgeschlossen.

Die Isolierhaube kann dabei an ihrem dem flachbandförmigen Längsträger abgewandten Ende im Bereich des Austritts der jeweiligen Anschlusslasche eine Ausnehmung aufweisen, die vorzugsweise bogenförmig gestaltet ist. Die Ausnehmung dient dazu, gegebenenfalls bei besonders beengten Platzverhältnissen einen Anschlussdraht unmittelbar unter der Isolierhaube parallel zur entsprechenden Anschlusslasche in eine Anschlussklemme eines Schaltgerätes einzuführen.

Schaltgeräte mit vorgegebenen verschiedenen Abständen der Anschlussklemmen im Bereich von 4 bis 12 mm können hierbei mit zwei Sammelschienen mit verschiedener Stromführung verbunden werden, wenn die Verbindungsstege eine Länge im Bereich von 4 bis 12 mm aufweisen. Mit dieser Maßnahme lassen sich die erfindungsgemäßen Stromsammelschienen für alle herkömmlichen (L1/N = 2polig) Schaltgeräte verwenden.

Die Stromsammelschiene kann darüber hinaus eine festgelegte Anzahl von 2 bis 13 Anschlusslaschen aufweisen, wobei weiterhin auch ein Mehrfaches der jeweils 2 bis 13 Anschlusslaschen, d.h. z. B. 26 bzw. 39 Anschlusslaschen für entsprechende Anwendungsfälle vorteilhaft sind.

Zur Vereinfachung des Herstellvorganges ist es darüber hinaus vorteilhaft, die Abdeckhauben der Anschlusslaschen und die isolierende Hülle des flachbandförmigen Längsträgers einstückig aus Kunststoffmaterial herzustellen, wobei unterschiedliche Farbgebungen des Kunststoffmaterials für verschiedene Stromsammelschienen denkbar sind.

Im Folgenden wird ein Ausführungsbeispiel des Gegenstandes der Erfindung anhand der beigefügten Zeichnungen näher erläutert:

Es zeigen:
- Figur 1: eine Draufsicht auf eine aus mehreren Schaltgeräten gebildete elektrische Installationsanordnung mit daran angeordneten erfindungsgemäßen Stromsammelschienen,
- Figur 2: eine Schnittdarstellung durch eine der in Figur 1 dargestellten Stromsammelschienen,
- Figur 3: eine Ansicht entsprechend dem Pfeil C aus Figur 2 und
- Figur 4: eine Ansicht einer Stromsammelschiene entsprechend dem Pfeil D aus Figur 2.

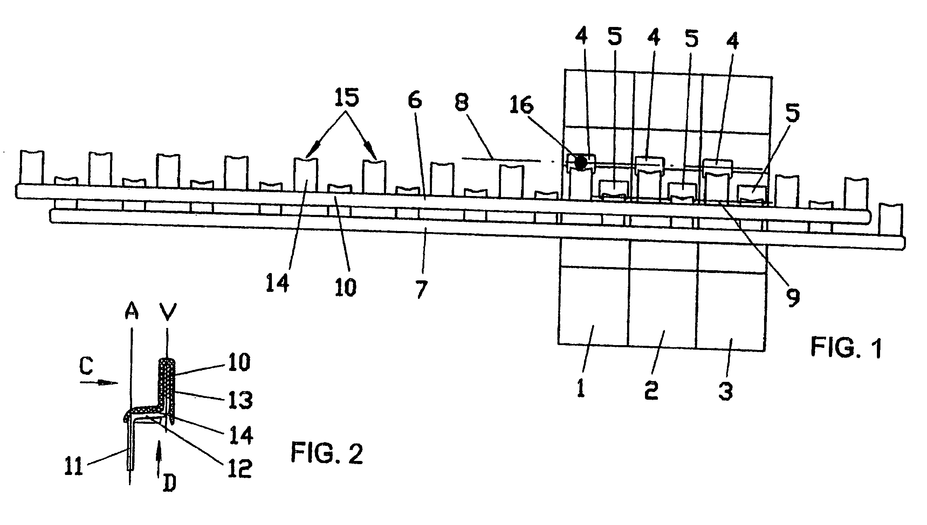

In der Figur 1 sind schematisch drei modulare Schaltgeräte 1, 2, 3 einer elektrischen Installationsverteilung dargestellt. Die Schaltgeräte sind auf einer hier nicht näher dargestellten Befestigungsschiene festgelegt, wobei in der Regel eine Vielzahl von Schaltgeräten, auf deren Darstellung hier ebenfalls aus Gründen der Übersichtlichkeit verzichtet wurde, nebeneinander angeordnet sind.

Im dargestellten Ausführungsbeispiel besitzt jedes Schaltgerät 1, 2, 3 an seiner dem Betrachter zugewandten Oberseite jeweils zwei mit Ausnehmungen versehene Anschlussklemmen 4 und 5. Diese Ausnehmungen sind zur Aufnahme von Anschlusslaschen von Stromschienen vorgesehen. Die Anschlussklemmen 4 liegen dabei auf einer gemeinsamen strichpunktiert dargestellten Linie 8 und werden durch eine Stromsammelschiene 6 gemeinsam mit Strom beaufschlagt. Die Anschlussklemmen 5 der Schaltgeräte 1, 2, 3 befinden sich ebenfalls auf einer gemeinsamen strichpunktiert dargestellten Linie 9 und werden von einer Sammelschiene 7 mit Strom beaufschlagt.

In der Querschnittsdarstellung der Figur 2 wird der Aufbau der in Figur 1 dargestellten Stromsammelschienen 6 und 7 im Einzelnen verdeutlicht,. Die Stromsammelschienen 6, 7 werden im Wesentlichen gebildet aus einem flachbandförmigen Längsträger 10, welcher die so genannte Verbindungsebene V der Stromsammelschiene bildet. Aus dem Längsträger 10 stehen einzelne neben einander angeordnete Anschlusslaschen 11 hervor, welche mit dem Längsträger 10 durch Verbindungsstege 12 verbunden sind. Durch die neben einander liegenden Anschlusslaschen 11 wird eine so genannte Anschlussebene A gebildet, wobei Anschlussebene A und Verbindungsebene V erfindungsgemäß parallel beabstandet zueinander angeordnet sind. Durch diese neuartige Ausbildung der Stromsammelschiene bleibt der Anschlussbereich unmittelbar oberhalb der Anschlussklemmen 4, 5 der Schaltgeräte 1, 2, 3 im Gegensatz zu aus dem Stand der Technik bekannten Stromsammelschienen frei zugänglich, so dass hier gegebenenfalls eine notwendige Anschlussverdrahtung in einer der Anschlussklemmen 4, 5 problemlos vorgenommen werden kann.

Wie aus der Figur 2 ersichtlich ist, sind die Verbindungsstege 12 jeweils rechtwinklig sowohl zur Anschlusslasche 11 als auch zum Längsträger 10 abgewinkelt, so dass sich eine doppel-L-förmige Querschnittsgestaltung der Stromsammelschienen 6, 7 ergibt. Natürlich ist alternativ zu der rechtwinkeligen Abwinkelung auch eine Abwinkelung mit anderen Winkelgraden denkbar, erfindungswesentlich ist, dass die Anschlussebene A und die Verbindungsebene V parallel beabstandet zueinander angeordnet sind.

Aus der Figur 2 ist darüber hinaus ersichtlich, dass der Längsträger 10 von einer isolierenden Hülle 13 umschlossen ist, wobei sich an die isolierende Hülle 13 im Bereich der jeweiligen Verbindungsstege 12 Abdeckhauben 14 anschließen, die den Verbindungssteg 12 an seiner den Anschlusslaschen 11 abgewandten Oberseite überdecken. Diese Gestaltung dient dem Isolierschutz gemäss der internationalen Klassifikation IP 20, da nach Einsetzen der Stromsammelschienen 6, 7 mit ihren jeweiligen Anschlusslaschen 11 in die Anschlussklemmen 4, 5 der Schaltgeräte 1, 2 3 keine Möglichkeit mehr besteht, Strom führende Teile der Stormsammelschiene mit dem Finger zu berühren. Die Abdeckhauben 14 der Verbindungsstege 12 sowie die isolierende Hülle 13 des Längsträgers 10 werden vorteilhaft einstückig im Rahmen eines Spritzgussverfahrens hergestellt und können dabei für unterschiedliche Stromschienenanwendungen unterschiedliche farbliche Gestaltung aufweisen.

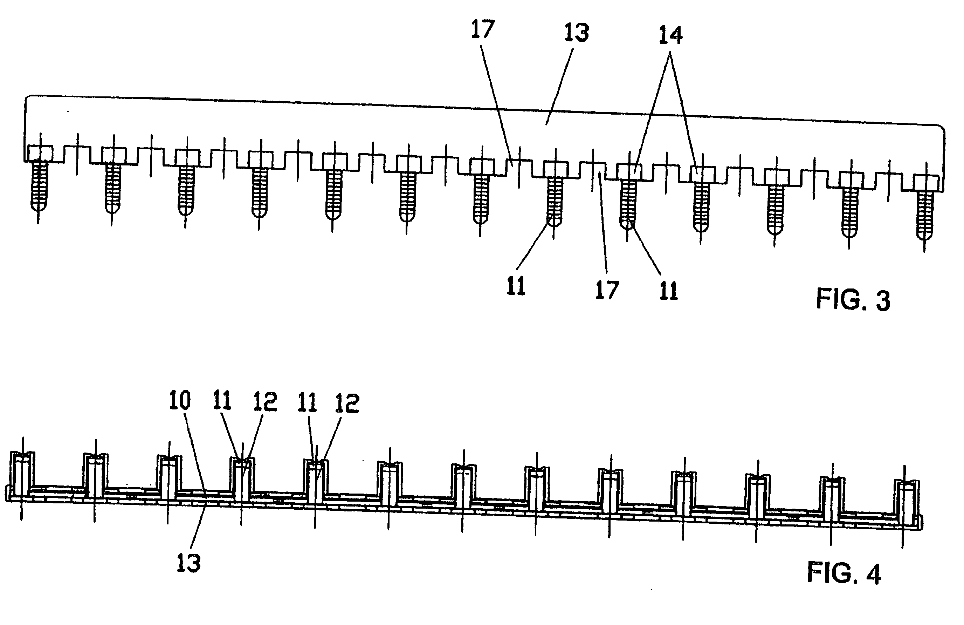

Sowohl aus der Darstellung der Figur 1 als auch aus der Darstellung der Figur 4 wird ergänzend deutlich, dass die jeweiligen Abdeckhauben 14 der Verbindungsstege 12 an ihrer vorderen, dem Längsträger 10 abgewandten Seite Ausnehmungen 15 aufweisen. Die Ausnehmungen 15 sind leicht bogenförmig ausgeführt und erleichtern die Anlage eines Anschlussdrahtes 16, der zur Stromversorgung der Stromsammelschiene 6 beispielhaft in der Figur 1 in der Anschlussklemme 4 des Schaltgerätes 1 zusätzlich eingeklemmt ist.

Aus der Figur 3 wird ergänzend deutlich, dass die den Längsträger umgebende Hülle 13 an ihrem unteren den Anschlusslaschen 11 zugewandtem Ende jeweils zwischen zwei benachbarten Anschlusslaschen 11 eine im Wesentlichen rechteckförmig ausgebildete Einbuchtung 17 aufweist. Bei dicht nebeneinander angeordneten Stromsammelschienen ist auf Grund dieser konstruktiven Gestaltung die Möglichkeit gegeben, dass, wie dieses insbesondere in Figur 1 deutlich wird, die Verbindungsstege 12 mit der sie überdeckenden Abdeckhaube 14 in die Einbuchtungen 17 der benachbarten Stromsammelschiene eingreifen können. Der Abstand zweier benachbarter Stromsammelschienen 6 und 7 lässt sich somit problemlos unterschiedlichen seitlichen Abständen der Anschlussklemmen 4, 5 der Schaltgeräte 1, 2, 3 anpassen. Mit Hilfe der erfindungsgemäßen Stromsammelschienen lassen sich Abstände zwischen den durch die Anschlussklemmen 4 und 5 definierten Linien 8 und 9 von 4 bis 11 mm ausgleichen.

### Bezugszeichenliste

- 1: Schaltgerät
- 2: Schaltgerät
- 3: Schaltgerät
- 4: Anschlussklemme
- 5: Anschlussklemme
- 6: Stromsammelschiene
- 7.: Stromsammelschiene
- 8.: Linie
- 9.: Linie
- 10.: Längsträger
- 11.: Anschlusslasche
- 12.: Verbindungssteg
- 13.: Hülle
- 14.: Abdeckhaube
- 15.: Ausnehmung
- 16.: Anschlussdraht
- 17.: Einbuchtung

## Patentansprüche

1. Stromsammelschiene zur gleichzeitigen phasenweisen Speisung mehrerer nebeneinander angeordneter modularer Schaltgeräte in einer elektrischen Installationsverteilung mit einem flachbandförmigen Längsträger, an welchem einseitig aus der durch den Längsträger gebildeten Verbindungsebene einzelne nebeneinander angeordnete Anachlusslaschen zur Verbindung mit in Ausnehmungen an den elektrischen Geräten befindlichen Anschlussklemmelementen hervorstehen, wobei der Längsträger von einer isolierenden Hülle umschlossen ist, die durch den Längsträger (10) gebildete Verbindungsebene (V) der Stromsammelschiene (6, 7) und die durch die Anschlusslaschen (11) gemeinsam gebildete Anschlussebene (A) der Stromsammelschienen (6, 7) voneinander getrennt parallel beabstandet zueinander angeordnet sind und die Anschlusslaschen (11) durch Verbindungsstege (12) mit dem Längsträger (10) verbunden sind,
**dadurch gekennzeichnet, dass**
die den Längsträger umschließende isolierende Hülle (13) an ihrem unteren, den Anschtusslaschen (11) zugewandten Ende jeweils zwischen zwei benachbarten Anschlusslaschen (11) eine querverlaufende durchgehende Einbuchtung (17) aufweist.

2. Stromsammelschiene nach Anspruch 1,
dadurch gekenntzeichnet, dass
die Verbindungsstege (12) mindestens an ihrer den Anschlusslaschen (11) abgewandten Oberseite durch eine isolierende Abdeckhaube (14) überdeckt sind.

3. Stromsammelschiene nach Anspruch 2,
**dadurch gekennzeichnet, dass**
die Abdeckhaube (14) an ihrem dem Längsträger (10) abgewandten Ende im Bereich des Austritts der jeweiligen Anschlusslasche (11) eine Ausnehmung (4, 5) aufweist.

4. Stromsammelschiene nach Anspruch 3,
**dadurch gekennzeichnet, dass**
die Ausnehmung (15) bogenförmig ausgebildet ist.

5. Stromsammelschiene nach einem der vorgenannten Ansprüche,
**dadurch gekennzeichnet, dass**
die Verbindungsstege (12) eine Länge im Bereich von 4 bis 12 mm aufweisen.

6. Stromsammelschiene nach einem der vorgenannten Ansprüche,
**dadurch gekennzeichnet, dass**
an einem Längsträger (10) dreizehn Anschlusslaschen (11) angeordnet sind.

7. Stromsammelschiene nach einem der vorgenannten Ansprüche,
dadurch gekenntzeichnet, dass
an einem Längsträger (10) ein Mehrfaches von jeweils dreizehn Anschlusslaschen (11) angeordnet ist.

8. Stromsammelschiene nach einem der vorgenannten Ansprüche,
**dadurch gekennzeichnet, dass**
an dem Ende des Längsträgers (10) jeweils Abdeckkappen angeordnet sind.

9. Stromsammelschiene nach Anspruch 2,
**dadurch gekennzeichnet, dass**
die Abdeckhaube (14) und die isolierende Hülle einstückig aus Kunststoffmaterial gefertigt sind, wobei unterschiedliche Farbgebungen des Kunststoffmaterials vorgesehen sind.

## Claims

1. Busbar for simultaneous phased feeding of several modular switching devices arranged side by side in an electrical distribution board with a flat-belt-like longitudinal beam on which individual connecting lugs arranged side by side for connecting to connecting-terminal elements located in recesses on the electrical devices protrude on one side from the connection plane formed by the longitudinal beam, the longitudinal beam being surrounded by an insulating sheath, the connection plane (V), formed by the longitudinal beam (10), of the busbar (6, 7) and the connecting plane (A), formed jointly by the connecting lugs (11), of the busbars (6, 7) being arranged separately from one another and spaced from one another in parallel, and the connecting lugs (11) being connected to the longitudinal beam (10) by means of connection webs (12),
**characterised in that**
the insulating sheath (13) surrounding the longitudinal beam exhibits at its lower end facing towards the connecting lugs (11) a transversely extending continuous indentation (17), in each instance between two adjacent connecting lugs (11).

2. Busbar according to Claim 1,
**characterised in that**
the connection webs (12) are covered, at least on their upper side facing away from the connecting lugs (11), by an insulating covering hood (14).

3. Busbar according to Claim 2,
**characterised in that**
the covering hood (14) exhibits a recess (4, 5) at its end facing away from the longitudinal beam (10) in the region of the emergence of the respective connecting lug (11).

4. Busbar according to Claim 3,
**characterised in that**
the recess (15) is formed in the shape of an arch.

5. Busbar according to one of the aforementioned claims,
**characterised in that**
the connection webs (12) have a length within the range from 4 mm to 12 mm.

6. Busbar according to one of the aforementioned claims,
**characterised in that**
thirteen connecting lugs (11) are arranged on a longitudinal beam (10).

7. Busbar according to one of the aforementioned claims,
**characterised in that**
a multiple of, in each instance, thirteen connecting lugs (11) are arranged on a longitudinal beam (10).

8. Busbar according to one of the aforementioned claims,
**characterised in that**
covering caps are arranged in each instance at the end of the longitudinal beam (10).

9. Busbar according to Claim 2,
**characterised in that**
the covering hood (14) and the insulating sheath have been integrally produced from plastic material, differing colour-schemes of the plastic material being provided.

## Revendications

1. Barre omnibus servant à alimenter de manière simultanée par phase plusieurs appareils de commutation modulaires disposés les uns à côté des autres dans un distributeur d'installation électrique comportant un support longitudinal en forme de bande plate, sur lequel diverses barres de connexion disposées les unes à côté des autres et servant à établir une liaison avec des éléments de serrage de connexion se trouvant dans des évidements sur des appareils électriques dépassent d'un côté du plan de liaison formé par le support longitudinal, le support longitudinal étant entouré par une enveloppe isolante, que le plan de liaison (V) de la barre omnibus (6, 7), formé par le support longitudinal (10), et le plan de connexion (A) des barres omnibus (6, 7), formé de manière conjointe par les barres de connexion (11) sont disposés de manière parallèle et séparément à distance l'un de l'autre, et que les barres de connexion (11) sont reliées au support longitudinal (10) par des entretoises de liaison (12),
**caractérisée en ce que**
l'enveloppe (13) isolante entourant le support longitudinal présente au niveau de son extrémité inférieure tournée vers les barres de connexion (11) respectivement entre deux barres de connexion (11) adjacentes, un renfoncement (17) continu s'étendant de manière transversale.

2. Barre omnibus selon la revendication 1,
**caractérisée en ce que**
l'entretoise de liaison (12) est recouverte au niveau de son côté supérieur opposé aux barres de connexion (11) par un couvercle (14) isolant.

3. Barre omnibus selon la revendication 2,
**caractérisée en ce que**
le couvercle (14) présente au niveau de son extrémité opposée au support longitudinal (10), dans la zone de la sortie de la barre de connexion (11) concernée, un évidement (4, 5).

4. Barre omnibus selon la revendication 3,
**caractérisée en ce que**
l'évidement (15) est réalisé de manière à présenter une forme voûtée.

5. Barre omnibus selon l'une quelconque des revendications précédentes,
**caractérisée en ce que**
les entretoises de liaison (12) présentent une longueur située dans la plage allant de 4 à 12 mm.

6. Barre omnibus selon l'une quelconque des revendications précédentes,
**caractérisée en ce que**
treize barres de connexion (11) sont disposées sur un support longitudinal (10).

7. Barre omnibus selon l'une quelconque des revendications précédentes,
**caractérisée en ce**
**qu'**une pluralité de respectivement treize barres de connexion (11) est disposée au niveau du support longitudinal (10).

8. Barre omnibus selon l'une quelconque des revendications précédentes,
**caractérisée en ce que**
des couvercles sont respectivement disposés au niveau de l'extrémité du support longitudinal (10).

9. Barre omnibus selon la revendication 2,
**caractérisée en ce que**
le couvercle (14) et l'enveloppe isolante sont fabriqués d'un seul tenant en un matériau en plastique, divers coloris étant prévus pour le matériau en plastique.
